(19) Europäisches Patentamt
European Patent Office
Office européen des brevets

(11) **EP 3 256 655 B1**

(12) **EUROPÄISCHE PATENTSCHRIFT**

(45) Veröffentlichungstag und Bekanntmachung des Hinweises auf die Patenterteilung:
**05.09.2018  Patentblatt 2018/36**

(21) Anmeldenummer: **16702883.6**

(22) Anmeldetag: **15.01.2016**

(51) Int Cl.:
*E04B 1/66* *(2006.01)*     *E04F 13/08* *(2006.01)*
*E04F 15/18* *(2006.01)*     *E04F 13/00* *(2006.01)*

(86) Internationale Anmeldenummer:
**PCT/EP2016/050710**

(87) Internationale Veröffentlichungsnummer:
**WO 2016/128170 (18.08.2016 Gazette 2016/33)**

(54) **DICHTUNGSBAHN UND KLEBEBAND FÜR NASSZELLEN**

SEALING SET FOR WET CELLS

SET D'ÉTANCHÉITÉ POUR BLOC SANITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2015  DE 102015101841**
       **09.03.2015  DE 102015103424**
       **11.03.2015  US 201562131656 P**

(43) Veröffentlichungstag der Anmeldung:
**20.12.2017  Patentblatt 2017/51**

(73) Patentinhaber: **HYDROPHON Kunststofftechnik GmbH**
**57399 Kirchhundem (DE)**

(72) Erfinder: **HILLE, Thomas**
**57399 Kirchhundem (DE)**

(74) Vertreter: **Beckmann, Jürgen**
**Dr. Jürgen Beckmann**
**Patentanwalt**
**An der Baumschule 23**
**57462 Olpe (DE)**

(56) Entgegenhaltungen:
**DE-A1-102011 054 523     DE-U1-202011 107 186**
**US-A- 5 268 228**

**Beschreibung**

Die Erfindung betrifft eine Dichtungsbahn, ein Klebeband, sowie einen daraus bestehendes Dichtungsset zur Anordnung zwischen einer Wand und einem Wandbelag, insbesondere in einer Nasszelle.

Aus der DE 10 2011 054 523 A1 ist ein Dichtungsset für Nasszellen bekannt, welches "trocken" verarbeitet werden kann, indem Dichtungsbahnen mit Hilfe einer wandseitig aufgebrachten Kleberschicht überlappend auf die Wand geklebt werden.

Des Weiteren offenbart die DE 20 2011 107 186 U eine Dichtungsbahn für Mauerwerk oder dergleichen mit einer raumseitigen Vliesschicht und einer wandseitigen Schaumkunststoffschicht, die durch eine wasserdichte Sperrfolie verbunden sind.

Vor diesem Hintergrund war es Aufgabe der vorliegenden Erfindung, eine alternative Dichtung für Räume wie insbesondere Nasszellen bereitzustellen.

Diese Aufgabe wird durch ein Dichtungsset gemäß Anspruch 8, durch eine Dichtungsbahn nach Anspruch 1, und durch einen Wandanschluss nach Anspruch 11 gelöst. Vorteilhafte Ausgestaltungen sind in den Unteransprüchen enthalten.

Ein erfindungsgemäßes Dichtungsset nach Anspruch 8 enthält eine Dichtungsbahn und ein Klebeband, welche nachfolgend näher erläutert werden.

Gemäß einem Aspekt betrifft die Erfindung demnach eine Dichtungsbahn zur Anbringung zwischen einer Wand und einem Wandbelag, beispielsweise einem Fliesenbelag. Wie der Begriff "Bahn" andeutet, handelt es sich bei der Dichtungsbahn um ein flächiges, streifenförmiges und flexibles Produkt mit einer gegebenen Breite von typischerweise einigen Dezimetern und einer geringen Dicke von typischerweise einigen Millimetern oder weniger. Die Dichtungsbahn wird im unverarbeiteten Zustand vorzugsweise in Längsrichtung aufgerollt, so dass benötigte Längen der Dichtungsbahn (z. B. entsprechend der Raumhöhe) passend abgetrennt werden können. Des Weiteren ist der Begriff "Wand" hier und im Folgenden breit zu verstehen als jedweder Untergrund, beispielsweise auch in Form eines Raumbodens oder einer Raumdecke. Die Dichtungsbahn enthält die folgenden Komponenten:

　　　a) Eine wasserundurchlässige Trägerschicht, welche aus Schaumkunststoff besteht. Die Trägerschicht erstreckt sich typischerweise über die gesamte Fläche der Dichtungsbahn. Sie ist vorzugsweise gas- und/oder wasserundurchlässig, so dass sie eine Dampfsperre bildet.

　　　b) Eine auf einer Seite der Trägerschicht angeordnete haftvermittelnde Struktur. Die Seite der Trägerschicht, welche diese Struktur trägt, wird nachfolgend auch als "Raumseite" bezeichnet, da sie bei der Verarbeitung in der Regel dem Raum zugewendet werden soll. Die haftvermittelnde Struktur kann insbesondere dahingehend ausgebildet sein, dass sie das gute Anhaften eines Fliesenklebers ermöglicht. Sie kann vorzugsweise durch ein Vlies (z.B. ein Spinnvlies aus synthetischen Fasern) gebildet werden.

In einer bevorzugten Ausführungsform weist die Dichtungsbahn auch wandseitig eine haftvermittelnde Struktur auf (z.B. die gleiche Struktur wie auf der Raumseite). Dadurch wird es möglich, die Dichtungsbahn "nass" zu verarbeiten, also beispielsweise in einen auf der Wand aufgetragenen Fliesenkleber oder eine andere Bauchemikalie einzubetten.

Bei einer Weiterbildung der vorstehend beschriebenen Ausführungsform ist mindestens ein (in Längs- bzw. Bahnrichtung verlaufender) wandseitiger Randstreifen der Dichtungsbahn frei von der haftvermittelnden Struktur. Vorzugsweise sind die beiden sich gegenüberliegenden Randstreifen der Dichtungsbahn frei von der haftvermittelnden Struktur. Insbesondere kann in den Randstreifen die Trägerschicht freiliegen. Die Breite der freien Randstreifen kann typischerweise zwischen ca. 20 mm und ca. 100 mm liegen. Die Bereitstellung der Randstreifen ermöglicht eine "trockene Anbindung", bei der beispielsweise die Trägerschicht mit einem Klebeband auf die Wand geklebt wird.

In einer anderen bevorzugten Ausführungsform kann die Dichtungsbahn wandseitig eine Kleberschicht tragen, mit welcher sie auf die Wand oder einen anderen Untergrund geklebt werden kann. Die Kleberschicht erstreckt sich dabei optional vollflächig über die gesamte Wandseite der Trägerschicht, so dass die Dichtungsbahn im Rahmen einer "trockenen" Verarbeitung vollflächig auf die Wand geklebt werden kann.

Gemäß einer anderen Weiterbildung der vorstehenden Ausführungsform ist die Kleberschicht auf einen (in Längs- bzw. Bahnrichtung verlaufenden) Randstreifen der Dichtungsbahn beschränkt, so dass sie beispielsweise auf ein bereits an einer Wand befindliches Klebeband geklebt werden kann. Insbesondere kann diese Ausführungsform damit kombiniert werden, dass die Dichtungsbahn wandseitig eine haftvermittelnde Struktur (zwischen den Randstreifen) aufweist.

Gemäß einem weiteren Aspekt betrifft die Erfindung ein Klebeband zur Anbringung zwischen einer Wand und einem Wandbelag, welches die folgenden Komponenten umfasst:

　　　a) Eine Trägerschicht aus einem Schaumkunststoff. Die Trägerschicht kann ähnlich wie bei der Dichtungsbahn ausgebildet sein, also z. B. wasserundurchlässig.

　　　b) Eine auf der Wandseite der Trägerschicht angeordnete Kleberschicht.

Das Klebeband ist ähnlich wie die Dichtungsbahn streifen- oder bahnförmig. Während die Dichtungsbahn typischerweise ein Breite von zwischen etwa 30 cm bis etwa 100 cm hat, ist das Klebeband in der Regel schmaler mit einer Breite im Bereich von ca. 4 cm bis ca. 20 cm.

Die Dichtungsbahn und das Klebeband weisen als charakteristisches Merkmal eine Trägerschicht aus Schaumkunststoff auf. Ein solcher Schaumkunststoff hat den Vorteil, dass seine Schaumstoffzellen scharfkantige, spitze Untergründe kompensieren können und die Dichtwirkung erhalten bleibt. Des Weiteren hat eine Trägerschicht aus Schaumkunststoff eine höhere Steifigkeit als beispielsweise eine Folie, was der Verarbeitbarkeit in vielerlei Hinsicht zugutekommt. So lässt sich die Dichtungsbahn bzw. das Klebeband gut blasenfrei auf einen Untergrund aufbringen, und beim Verpacken von mit Dichtungsbahn oder Klebeband werksseitig ausgerüsteten Objekten (z.B. Duschrinnen) entstehen im Material keine dauerhaften Knicke.

Das Klebeband kann optional dahingehend weitergebildet werden, dass sich auch raumseitig hierauf eine Kleberschicht befindet. An diese Kleberschicht kann dann beispielsweise ein wandseitiger (Vlies-freier) Randstreifen einer Dichtungsbahn der oben beschriebenen Art angeklebt werden.

Der Schaumkunststoff, welcher die Trägerschicht der Dichtungsbahn und/oder des Klebebandes bildet, ist ein geschlossenzelliger Kunststoff. Ein solcher geschlossenzelliger Schaumkunststoff hat eine Wasserundurchlässigkeit bzw. eine vernachlässigbare Wasseraufnahme und einen hohen Wasserdampfdiffusionswiderstand.

Des Weiteren kann der Schaumkunststoff optional beispielsweise aus Materialien wie einem Polyolefin, Polyethylen, Polypropylen, Polyurethan, Silikon, Zellkautschuk, Acrylic Foam, und/oder Butyl bestehen. Das im Schaumstoff eingeschlossene Gas ist typischerweise Luft.

Zusätzlich oder alternativ kann der Schaumkunststoff vernetzt sein, insbesondere physikalisch vernetzt. Bei der Vernetzung sind die Polymerketten des Materials an bestimmten Punkten chemisch untereinander verbunden und bilden ein dreidimensionales Netzwerk. Die physikalische Vernetzung wird dabei beispielsweise durch einen hochenergetischen Elektronenstrahl erreicht. Mit der physikalischen Vernetzung lassen sich besonders dünne Schaumkunststoff-Schichten herstellen. Zudem ist ein physikalisch vernetzter Schaumkunststoff daran erkennbar, dass er typischerweise eine geschlossene Oberfläche ("Schaumhaut") besitzt.

Es zeigt sich, dass die Bruchdehnung ein wichtiger Parameter für die Auswahl eines geeigneten Schaumkunststoffes ist. Die Bruchdehnung A ist definiert als die auf die Anfangsmesslänge $L_0$ einer Probe im Zugversuch bezogene bleibende Längenänderung $\Delta L = (L_u - L_0)$ nach erfolgtem Bruch ($L_u$ = Länge nach dem Bruch) gemäß der Formel

$$A = \Delta L / L_0 \cdot 100\%.$$

Diesbezüglich weist der Schaumkunststoff, welcher die Trägerschicht der Dichtungsbahn und/oder des Klebebandes bildet, eine Bruchdehnung von über 300 % auf, vorzugsweise von über 400 %.

Die Dicke der Trägerschicht der Dichtungsbahn und/oder des Klebebandes beträgt vorzugsweise weniger als ca. 5 mm, weniger als ca. 1 mm, oder weniger als ca. 0.2 mm. Typischerweise liegt sie zwischen ca. 0.5 mm und 5 mm, besonders bevorzugt zwischen ca. 0.2 mm und 1.0 mm.

Die Kleberschicht, welche sich auf dem Klebeband und (optional) auf der Dichtungsbahn befindet, kann insbesondere aus Butyl, Synthesekautschuk, einem vernetzten oder unvernetzten Acrylat, und/oder aus einer Kleberdispersion bestehen bzw. diese(s) enthalten. Zusätzlich oder alternativ kann die Dicke der Kleberschicht ca. 0.05 mm bis ca. 2.0 mm, vorzugsweise ca. 0.10 mm bis ca. 0.3 mm betragen.

Des Weiteren sind die Kleberschichten vor ihrer Verarbeitung vorzugsweise durch eine abziehbare Schutzfolie abgedeckt. Die Schutzfolie kann dabei in Bahn- bzw. Längsrichtung und/oder quer hierzu in zwei oder mehr Streifen geteilt sein, die separat (nacheinander) von der Kleberschicht abgezogen werden können.

Gemäß einer anderen Weiterbildung der Erfindung ist das Klebeband dreidimensional als eine Innenecke oder als eine Außenecke geformt. Eine derartige vorgeformte Innenecke bzw. Außenecke lässt sich aufgrund der wandseitigen Kleberschicht in einer entsprechenden Rauminnenecke bzw. Raumaußenecke anbringen und kann dort für eine absolute Dichtheit im kritischen Stoßpunkt von mehreren Dichtungsbahnen sorgen.

Die Herstellung der vorgenannten Innenecken oder Außenecken erfolgt vorzugsweise im Tiefziehverfahren. Dabei wird eine anfängliche ebene Bahn des Schaumkunststoff-Materials vorzugsweise zunächst erwärmt, dann leicht vorgedehnt, und anschließend mit Hilfe eines Vakuums auf eine Werkzeugform gezogen. Bei Herstellung der Innenecken wird als Werkzeugform beispielsweise die Spitze einer (quadratischen oder dreieckigen) Pyramide verwendet.

Des Weiteren bestehen die Innenecken und/oder Außenecken vorzugsweise im Wesentlichen aus der Trägerschicht aus Schaumkunststoff (d.h. sie sind frei von einer haftvermittelnden Schicht und einer Kleberschicht; lediglich an den Rändern kann optional Kleber als Fixierhilfe während der Montage angebracht sein).

Das erfindungsgemäße Dichtungsset kann eine Dichtungsbahn sowie ein Klebeband gemäß jeweils einer der oben beschriebenen Ausführungsformen enthalten. Das Klebeband kann dabei zur Abdichtung von Stößen zwischen benachbarten Dichtungsbahnen sowie von Raumkanten und dergleichen verwendet werden, wobei es unterlappend zur Dichtungsbahn verklebt wird.

Bei einer anderen optionalen Ausbildung der Erfindung ist die Dichtungsbahn oder das Klebeband als eine Manschette für eine Duschrinne oder dergleichen ausgebildet und trägt raumseitig eine haftvermittelnde Struktur wie beispielsweise ein Vlies. Die Ausbildung als Manschette bedeutet üblicherweise, dass die Dichtungsbahn oder das Klebeband die Form eines rechteckigen Rahmens aufweist, wobei das freie Innere des Rahmens über der Vertiefung einer Duschrinne zu liegen kommt und die Rahmenkanten typischerweise auf Flanschen der Duschrinne sowie auf dem Untergrund (Boden) kleben.

Vorzugsweise ist bei der vorstehend beschriebenen Ausführungsform mindestens ein Randstreifen der Dichtungsbahn bzw. des Klebebandes frei von der haftvermittelnden Struktur. Typischerweise handelt es sich dabei um einen Randstreifen an einem Längsrand. Optional sind gegenüberliegende Randstreifen und besonders bevorzugt alle Randstreifen frei von der Struktur. An den freien Randstreifen kann eine Dichtungsbahn und/oder ein Klebeband und/oder eine anderes Dichtungsmittel (beispielsweise ein Fugenband mit Kapillarstopp gemäß der EP 1 967 107 B1) angeklebt werden.

Nach einem weiteren Aspekt betrifft die Erfindung einen wasserdichten Wandabschluss, welcher die folgenden Komponenten enthält:

- Eine Wand, beispielsweise eine Mauer, einen Boden, eine Raumdecke, oder eine Wand in Holzständerbauweise.

- Gegebenenfalls ein Klebeband mit einer Trägerschicht aus einem Schaumkunststoff und einer wandseitig darunter angeordneten Kleberschicht.

- Eine Dichtungsbahn mit einer Trägerschicht aus einem Schaumkunststoff und einer raumseitig darauf angeordneten haftvermittelnden Struktur wie beispielsweise einem Vlies.

- Einen mittels Fliesenkleber oder dergleichen auf der haftvermittelnden Struktur der Dichtungsbahn angebrachten Wandbelag.

Typischerweise erfolgt die Anordnung der genannten Komponenten schichtenweise in der angegebenen Reihenfolge, wobei das Klebeband sich allerdings nur im Bereich der Stöße zwischen benachbarten Dichtungsbahnen erstreckt.

Des Weiteren betrifft die Erfindung die Verwendung einer Dichtungsbahn und/oder eines Klebebandes gemäß einer der oben beschriebenen Ausführungsformen zur Herstellung eines Wandabschlusses, insbesondere eines Wandabschlusses der vorstehend genannten Art.

Im Folgenden wird die Erfindung mit Hilfe der Figuren beispielhaft näher erläutert. Dabei zeigt:

Fig. 1     einen schematischen Querschnitt durch einen Wandbelag mit einem Dichtungsset gemäß einer ersten Ausführungsform der Erfindung, bei welcher das Klebeband beidseitig selbstklebend ausgerüstet ist und die Dichtungsbahn wandseitig ein Vlies trägt;

Fig. 2     separat die Dichtungsbahn des Dichtungssets von Figur 1;

Fig. 3     separat das Klebeband des Dichtungssets von Figur 1 mit Abziehfolien;

Fig. 4     einen schematischen Querschnitt durch einen Wandbelag mit einem Dichtungsset gemäß einer zweiten Ausführungsform der Erfindung, bei welcher die Randstreifen der Dichtungsbahn mit einer Kleberschicht ausgerüstet sind;

Fig. 5     einen schematischen Querschnitt durch einen Wandbelag mit einem Dichtungsset gemäß einer dritten Ausführungsform der Erfindung, bei welcher die Dichtungsbahnen wandseitig vollflächig mit einer Kleberschicht ausgerüstet sind;

Fig. 6     die Anbringung einer Dichtungsbahn über einer Duschrinne;

Fig. 7     die Anordnung von rechteckigen Innenecken und Außenecken in einem Raum;

Fig. 8     die Anbringung einer rechteckigen Innenecke;

Fig. 9     die Anordnung von pyramidenförmigen Innenecken und von Außenecken in einem Raum;

Fig. 10    die Anbringung einer pyramidenförmigen Innenecke.

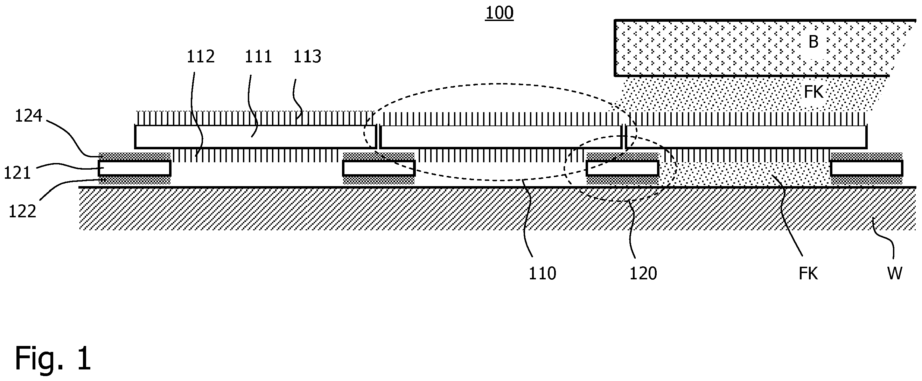

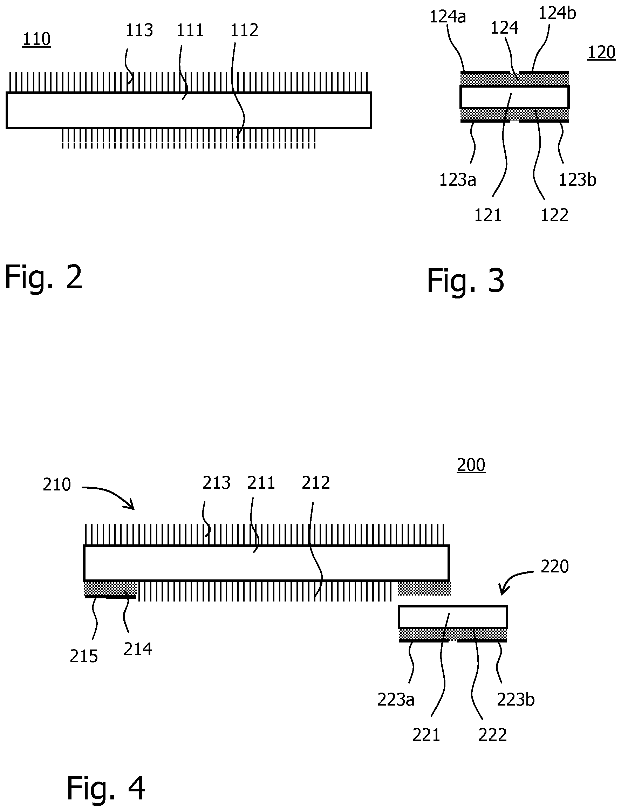

Figur 1 zeigt in einem schematischen Querschnitt einen Wandaufbau, welcher mit einem Dichtungsset 100 gemäß einer ersten Ausführungsform der Erfindung hergestellt ist. Das Dichtungsset ist dabei zwischen der Wand W und einem Wandbelag B (z.B. Fliesen) angeordnet. Es umfasst zwei grundlegende Komponenten, nämlich (vgl. Figuren 2 und 3):

- Dichtungsbahnen 110, welche eine Trägerschicht 111 aus einem geschlossenzelligen Schaumkunststoff enthalten und auf deren Raumseite (in Figur 1 oben) als haftvermittelnde Struktur ein Vlies 113 angeordnet ist. Bei der dargestellten Ausführungsform befindet sich ferner wandseitig auf der Trägerschicht 111 ebenfalls eine haftvermittelnde Struktur in Form eines Vlieses 112, das sich jedoch nur in einem mittleren Bereich erstreckt. Die benachbarten Randstreifen bleiben auf einer Breite von typischerweise ca. 20 bis 100 mm frei von Vlies, damit dort ein Kleber haften kann.

- Klebebänder 120, welche ebenfalls eine Trägerschicht 121 aus einem geschlossenzelligen Schaumkunststoff aufweisen (z.B. identisch mit dem Schaumkunststoff 111 der Dichtungsbahn 110), und auf deren Wandseite eine Kleberschicht 122 angeordnet ist. Die Kleberschicht 122 ist dabei vor der Verarbeitung (s. Fig. 3) von einer abziehbaren Schutzfolie abgedeckt, welche vorzugsweise in Längsrichtung in zwei Streifen 123a und 123b unterteilt ist.
Im dargestellten Ausführungsbeispiel tragen die Klebebänder 120 raumseitig ebenfalls eine Kleberschicht 124, wobei diese optional ebenso durch zwei Abziehfolien 124a und 124b geschützt wird.

Die Herstellung des Wandaufbaus erfolgt so, dass zunächst (nach Abziehen der Schutzfolien 123a, 123b) die Klebebänder 120 im passenden Abstand (vorgegeben durch die Breite des Vlieses 112 auf den Dichtungsbahnen) auf die Wand (oder den Boden, ...) geklebt werden. Dann wird der Zwischenraum zwischen den Klebebändern mit Fliesenkleber FK oder sonstiger Bauchemie gefüllt. Im nächsten Schritt wird eine Dichtungsbahn 110 trocken rechts und links auf Klebestreifen verklebt (Unterlappung) und mittig im Fliesenkleber FK bzw. der Bauchemie eingebettet. Schließlich wird der Wandbelag B (z.B. Fliesen) mittels eines Fliesenklebers FK auf das Vlies 113 der Dichtungsbahnen aufgebracht.

Figur 4 zeigt eine alternative Ausführungsform eines Dichtungssets 200, wobei gleiche oder ähnliche Komponenten um 100 erhöhte Bezugszeichen tragen. Der Unterschied zum Dichtungsset 100 der Figuren 1 bis 3 besteht darin, dass die Kleberschicht 214, welche Klebebänder 220 und Dichtungsbahnen 210 miteinander verbindet, nunmehr werkseitig auf den wandseitigen Randstreifen der Dichtungsbahnen 210 angeordnet ist, während die Raumseite der Klebebänder 220 frei von Kleber bleibt (vor der Verarbeitung).

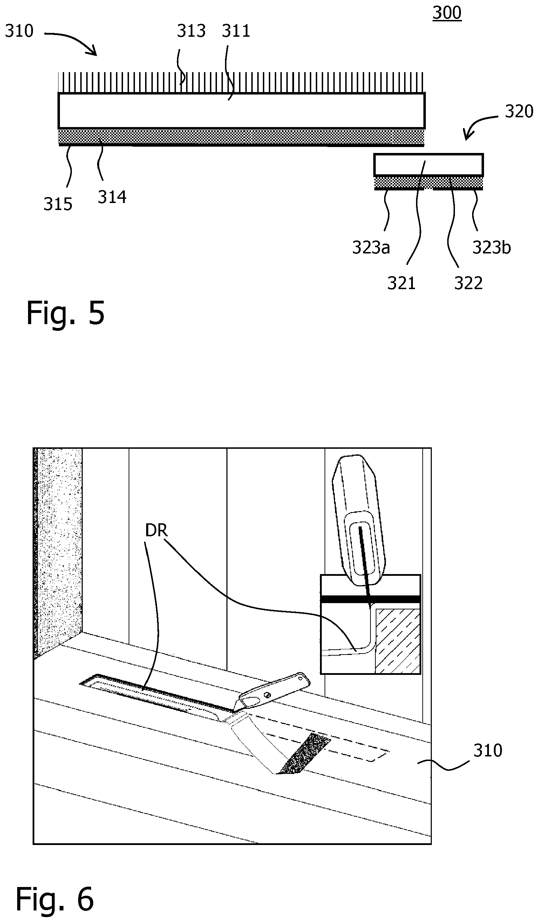

Figur 5 zeigt eine weitere alternative Ausführungsform eines Dichtungssets 300, wobei gleiche oder ähnliche Komponenten wie in Figur 1 um 200 erhöhte Bezugszeichen tragen. Der Unterschied zum Dichtungsset 100 der Figuren 1 bis 3 besteht darin, dass die Dichtungsbahn 310 wandseitig vollflächig mit einer Kleberschicht 314 ausgerüstet ist, welche vor der Verarbeitung durch eine Abziehfolie 315 geschützt ist. Eine solche Dichtungsbahn 310 kann somit trocken verlegt werden. Das Klebeband 320 ist im Wesentlichen identisch zum Klebeband 220 aus Figur 4 ausgebildet.

Die Trägerschichten 111, 121, 211, 221, 311 und 321 in den beschriebenen Dichtungsbahnen und Klebeändern können insbesondere aus einem physikalisch vernetzten Kunststoff, beispielsweise einem Polyolefinschaum bestehen. Die Dicke der Trägerschichten kann vorzugsweise zwischen ca. 0.3 mm und ca. 0.6 mm betragen. Die Bruchdehnung der Trägerschichten beträgt vorzugsweise über 300%, beispielsweise ca. 450%. Aufgrund der Schaumstruktur der Trägerschicht 311 schmiegt sich diese besonders gut an eine Wandoberfläche an, was zu gutem Halt führt. Gleichzeitig besitzt die Trägerschicht aus Schaumkunststoff eine gewisse Steifigkeit, welche die Verarbeitung erleichtert (Vermeidung von Falten, Knicken, Luftblasen etc.).

Soweit Kleberschichten mit Abziehfolie geschützt sind, kann diese optional schrittweise längs- oder quer abgezogen werden, wobei ein spezielles Raster von Trennlinien durch die Abziehfolie für eine saubere, selbstdefinierte Trennung sorgt.

Figur 6 zeigt als Beispiel für eine Linienentwässerung die Einbindung einer Duschrinne DR in eine auf dem Boden verlegte Dichtungsbahn 310. Die Duschrinne DR (oder, bei Punktentwässerungen, der Abfluss bzw. das Rohr) wird dabei zunächst von einer Dichtungsbahn 310 überklebt, wobei darauf zu achten ist, dass sich über der Rinne möglichst kein Stoß von Bahnen befindet. Dann wird mit einem Messer die Abflussöffnung innen bündig ausgeschnitten. Aufgrund der wandseitigen Kleberschicht 314 haftet die Dichtungsbahn 310 dichtend auf dem horizontalen Flansch der (typischerweise metallischen) Duschrinne DR.

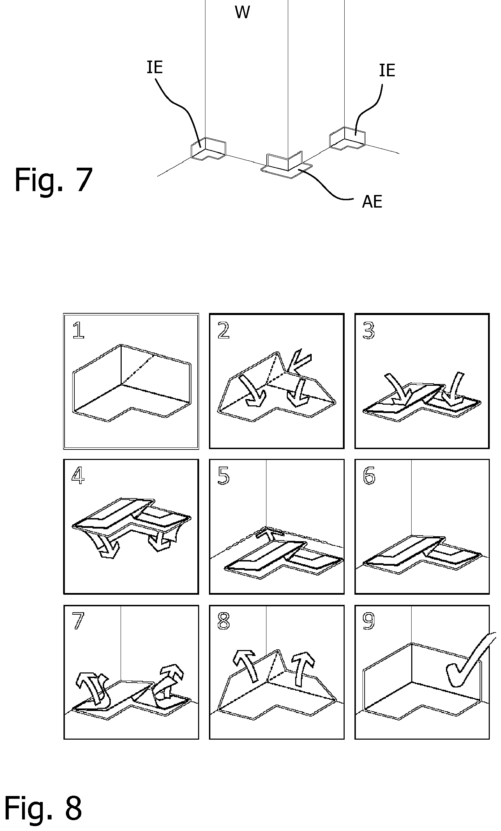

Figur 7 zeigt zwei rechteckige Innenecken IE und eine Außenecke AE, welche aus dem Material eines Klebebandes gebildet und in einer entsprechenden dreidimensionalen Form vorgeformt sind. Die kann beispielsweise durch Tiefziehen geschehen. Die Innenecken IE werden durch rechtwinklige Ecken begrenzt.

Figur 8 illustriert in neun Schritten beispielhaft die Anbringung einer rechtwinkligen Innenecke. Dabei wird die vorgeformte Innenecke zunächst zusammengelegt, dann in einer Ecke am Boden angeklebt, aufgerichtet, und den Wänden angeklebt. Alternativ können die Innenecken bzw. Außenecken auch allein aus einer Schaumkunststoff-Schicht bestehen, also keinen Kleber und kein Vlies tragen.

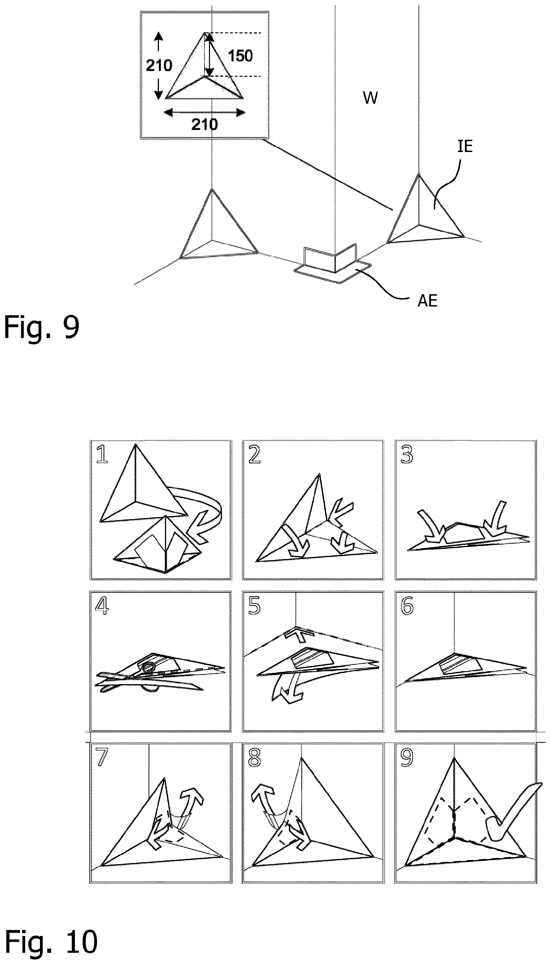

Figur 9 zeigt in Abwandlung zu Figur 7 zwei Innenecken IE von der Form einer Pyramide mit dreieckiger Grundfläche.

Figur 10 illustriert hierzu beispielhaft die Anbringung einer pyramidenförmigen Innenecke. Dabei wird die vorgeformte Innenecke zunächst eingeknickt und gegebenenfalls an den Seiten gekürzt. Nach Entfernung der Schutzfolie wird die Innenecke in der Bodenecke angeklebt, aufgerichtet, und den Wänden angeklebt.

Zusammenfassend lässt sich feststellen, dass gemäß einer Ausführungsform der Erfindung als ein Trägermaterial zelliger Schaumkunststoff verwendet wird (aus Polyolifin, Polyethylen, Polypropylen, Polyurethan, Silikon, Zellkautschuk, Acrylic Foam, Butyl etc.). Als Kleber kommt beispielsweise Butyl, Synthesekautschuk, vernetztes oder unvernetztes Acrylat, Dispersion oder dergleichen zum Einsatz. Klebebänder bzw. Klebestreifen werden gebildet als Kombination aus diesem Trägermaterial und dem Kleber.

Des Weiteren wird durch eine Ausführungsform der Erfindung eine Kombination von Trocken- und Nassverklebung bereitgestellt:

1. Die zellige Schaumstoffbahn ist dazu auf der Vorderseite vollflächig mit einer Vliesstruktur ausgestattet, zur Verankerung der Bauchemie.

2. Die Rückseite (Wand/Boden) der Schaumstoffbahn ist optional mittig mit einer Vliesstruktur versehen und hat rechts, links Vliesfreie Zonen zwischen 20-100 mm Breite für eine trockene Anbindung.

3. Ein Vliesfreier Klebestreifen wird an Kanten (Wand/Wand, Boden/Boden) und zur Unterlappung an Stößen von Schaumstoffbahnen vorgesehen. Der Klebestreifen ist typischerweise 50-200 mm breit und beidseitig selbstklebend oder einseitig klebend (dann muss auf die Rückseite Schaumstoffbahn rechts und links die Vliesfreie Seite durch Kleber mit Abdeckfolie ausgestattet werden).

4. Die Klebestreifen werden auf Wand/Boden aufgeklebt. Der Abstand der Klebestreifen ergibt sich aus der Vliesstrukturbreite (Rückseite Schaumstoffbahn).

5. Der Zwischenraum zwischen Klebestreifen wird mit Fliesenkleber oder sonstiger Bauchemie gefüllt.

6. Die Dichtbahnen werden trocken rechts und links auf die Klebestreifen geklebt (Unterlappung) und mittig in Bauchemie eingebettet.

7. Der Übergang zur Punkt- oder Linienentwässerung kann mit aufkaschierter Schaumkunststoff Membrane aus Kleber(Boden/Rinne)/Schaum/Vlies Kombination erfolgen.

Des Weiteren ist auch eine reine Nassverklebung mit einem zelligem Schaumkunststoff-System möglich, das die folgenden Komponenten enthält:

- Dichtbahnen

- Klebebänder (für Kanten)

- Innen- und Außenecken.

Ferner ist eine reine Trockenverklebung mit einem zelligem Schaumkunststoff-System möglich, wenn die Dichtbahnen wandseitig vollflächig mit einer Kleberschicht ausgestattet sind.

Das beschriebene System erzielt folgende Vor-teile:

Schaumkunststoff: die Schaumstoffzellen kompen-sieren scharfkantige, spitze Untergründe, die Dichtwirkung bleibt erhalten

Geschlossenzellig Form: vernachlässigbare Was-seraufnahme, sehr hoher Wasserdampdfiffusions-widerstand

Physikalische Vernetzung: erhöhte Beständigkeit gegenüber bauüblichen alkalischen Medien, hohe Temperaturbeständigkeit

Polyolefinschaumstoff: chemikalienbeständig, unterstützt keine Schimmelbildung, umweltfreundlich

Hohe Anschmiegsamkeit: passt sich gut an Unebenheiten an

Hohe Elastizität: kompensiert thermische bedingte Dilatationsspannungen, entkoppelt die Fliese vom Untergrund

Relativ geringe dynamische Steifigkeit: akustische Entkopplung Fliese-Untergrund

Leichtes Material: einfacher Transport, einfache Positionierung von großen Flächen an der Baustelle durch eine Person

Butylkleber (Dicke ca. 0.5 -2.0 mm): beidseitig selbstklebend und lässt sich in der Ecke dicht verkleben; da Butyl sich verkneten bzw. verschweißen lässt, können die Schnittkanten bei der Innenecküberlappung geschlossen werden.

**Patentansprüche**

1. Dichtungsbahn (110, 210, 310) zur Anbringung zwischen einer Wand (W) und einem Wandbelag (B), umfassend eine Trägerschicht (111, 211, 311) aus einem Schaumkunststoff und eine raumseitig darauf angeordnete haftvermittelnde Struktur (113, 213, 313) wie beispielsweise ein Vlies, **dadurch gekennzeichnet, dass** die Trägerschicht (111, 211, 311) wasserundurchlässig ist, wobei der Schaumkunststoff geschlossenzellig ist und eine Bruchdehnung von über 300 % aufweist.

2. Dichtungsbahn (110, 210, 310) nach Anspruch 1, umfassend die Trägerschicht (111, 211, 311) aus einem Schaumkunststoff und eine raumseitig unmittelbar darauf angeordnete haftvermittelnde Struktur (113, 213, 313) in Form eines Vlieses.

3. Dichtungsbahn (110, 210, 310) nach einem der vor-hergehenden Ansprüche, **dadurch gekennzeich-net, dass** die Dichtungsbahn wandseitig eine haftvermittelnde Struktur (112, 212) aufweist, wobei vorzugsweise mindestens ein Randstreifen in Dichtungsbahn frei von dieser Struktur ist.

4. Dichtungsbahn (210, 310) nach einem der vorhergehenden Ansprüche, **dadurch gekennzeichnet, dass** die Dichtungsbahn wandseitig eine Kleberschicht (214, 314) trägt.

5. Dichtungsbahn (210, 310) nach Anspruch 4, **dadurch gekennzeichnet, dass** die Kleberschicht (214, 314) vollflächig aufgebracht oder auf mindestens einen Randstreifen beschränkt ist.

6. Dichtungsbahn (110, 210, 310) nach einem der vorhergehenden Ansprüche, **dadurch gekennzeichnet, dass** der Schaumkunststoff

   - physikalisch vernetzt ist; und/oder
   - Polyolefin, Polyethylen, Polypropylen, Polyurethan, Silikon, Zellkautschuk, Acrylic Foam, und/oder Butyl enthält; und/oder
   - eine Dicke von weniger als ca. 5 mm, vorzugsweise weniger als ca. 1 mm, besonders bevorzugt weniger als ca. 0.6 mm hat.

7. Dichtungsbahn (110, 210, 310) nach Anspruch 4, **dadurch gekennzeichnet, dass** die Kleberschicht Butyl, Synthesekautschuk, ein vernetztes Acrylat, ein unvernetztes Acrylat, und/oder eine Kleberdispersion enthält.

8. Dichtungsset (100, 200, 300) zu Anbringung zwischen einer Wand (W) und einem Wandbelag (B), enthaltend:

   - eine Dichtungsbahn (110, 210, 310) nach einem der Ansprüche 1 bis 7;
   - ein Klebeband (120, 220, 320) mit einer Trägerschicht (121, 221) aus einem Schaumkunststoff und einer wandseitig darunter angeordneten Kleberschicht (122, 222).

9. Dichtungsset (100) nach Anspruch 8, **dadurch gekennzeichnet, dass** raumseitig auf dem Klebeband eine Kleberschicht (124) angeordnet ist.

10. Dichtungsset (100, 200, 300) nach einem der Ansprüche 8 oder 9, **dadurch gekennzeichnet, dass** das Klebeband dreidimensional als Innenecke (IE) oder als Außenecke (AE) geformt ist.

11. Wasserdichter Wandabschluss, enthaltend:

    - eine Wand (W);
    - optional ein Klebeband (120, 220, 320) mit einer Trägerschicht (121, 221, 321) aus einem Schaumkunststoff und einer wandseitig darunter angeordneten Kleberschicht (122, 222, 322),
    - eine Dichtungsbahn (110, 210, 310) nach einem der Ansprüche 1 bis 7,
    - einen mittels Fliesenkleber (FK) oder dergleichen auf der haftvermittelnden Struktur (113, 213, 313) angebrachten Wandbelag (B).

## Claims

1. Sealing sheet (110, 210, 310) for arrangement between a wall (W) and a wall covering (B), comprising a support layer (111, 211, 311) made of a foamed plastic and an adhesion mediating structure (113, 213,313) such as a non-woven arranged on a room-facing side, **characterized in that** the support layer (111, 211, 311) is impermeable to water, wherein the foamed plastic is closed celled and has an elongation at break of over 300 %.

2. Sealing sheet (110, 210, 310) according to claim 1, comprising a support layer (111, 211, 311) made of a foamed plastic and an adhesion mediating structure (113, 213, 313) in the form of a non-woven arranged directly on the support layer on a room-facing side.

3. Sealing sheet (110, 210, 310) according to one of the preceding claims, **characterized in that** the sealing sheet has on the wall-facing side an adhesion mediating structure (112, 212), wherein preferably at least one border strip of the sealing sheet is free of this structure.

4. Sealing sheet (210, 310) according to one of the preceding claims, **characterized in that** the sealing sheet has on the wall side an adhesive layer (214, 314).

5. Sealing sheet (210, 310) according to claim 4, **characterized in that** the adhesive layer (214, 314) is applied over the entire surface or is limited to at least one border strip.

6. Sealing sheet (110, 210, 310) according to one of the preceding claims, **characterized in that** the foamed plastic

   - is physically crosslinked; and/or
   - contains polyolefin, polyethylene, polypropylene, polyurethane, silicone, cellular rubber, acrylic foam, and/or butyl; and/or
   - has a thickness of less than about 5 mm, preferably less than about 1 mm, particularly preferably less than about 0.6 mm.

**7.** Sealing sheet (110, 210, 310) according to claim 4, **characterized in that** the adhesive layer contains butyl, synthetic rubber, a crosslinked acrylate, an uncrosslinked acrylate and/or an adhesive dispersion.

**8.** Sealing kit (100, 200, 300) for arrangement between a wall (W) and a wall covering (B), comprising:

- a sealing sheet (110, 210, 310) according to one of the claims 1 to 7;
- an adhesive strip (120, 220, 320) with a support layer (121, 221) made of a foamed plastic and an adhesive layer (122, 222) arranged under the support layer on a wall-facing side of the adhesive strip.

**9.** Sealing kit (100) according to claim 8, **characterized in that** an adhesive layer (124) is arranged on the adhesive strip on the room-facing side.

**10.** Sealing kit (100, 200, 300) according to one of the claims 8 or 9, **characterized in that** the adhesive strip is three-dimensionally formed as inner corner (IE) or as an outer corner (AE).

**11.** Water tight wall closure, comprising:

- a wall (W);
- optionally an adhesive strip (120, 220, 320) with a support layer (121, 221, 321) made of a foamed plastic and an adhesive layer (122, 222, 322) arranged on a wall-facing side under the support layer,
- a sealing sheet (110, 210, 310) according to one of the claims 1 to 7,
- a wall covering (B) arranged by means of a tile glue (FK) or the like on the adhesion mediating structure (113, 213, 313).

**Revendications**

**1.** Bande d'étanchéité (110, 210, 310) pour installation entre une paroi (W) et un revêtement mural (B), comprenant une couche support (111, 211, 311) en mousse de plastique et une structure donnant de l'adhérence (113, 213, 313) comme par exemple un non-tissé, disposée côté pièce, **caractérisée en ce que** la couche support (111, 211, 311) est imperméable, selon lequel la mousse de plastique est à cellules fermées et a un allongement de rupture de plus de 300 %.

**2.** Bande d'étanchéité (110, 210, 310) selon la revendication 1, comprenant la couche support (111, 211, 311) en mousse de plastique et une structure donnant de l'adhérence (113, 213, 313) sous forme d'un non-tissé, disposée directement sur la couche support du côté de la pièce.

**3.** Bande d'étanchéité (110, 210, 310) selon une des revendications précédentes, **caractérisée en ce que** la bande d'étanchéité a une structure donnant de l'adhérence (112, 212) du côté de la paroi, selon lequel de préférence au moins une bande marginale de la bande d'étanchéité est exempte de cette structure.

**4.** Bande d'étanchéité (210, 310) selon une des revendications précédentes, **caractérisée en ce que** la bande d'étanchéité porte une couche adhésive (214, 314) du côté de la paroi.

**5.** Bande d'étanchéité (210, 310) selon la revendication 4, **caractérisée en ce que** la couche adhésive (214, 314) est appliquée sur toute la surface ou est limitée à au moins une bande marginale.

**6.** Bande d'étanchéité (110, 210, 310) selon une des revendications précédentes, **caractérisée en ce que** la mousse de plastique

- est réticulée physiquement ; et/ou
- contient de polyoléfine, polyéthylène, polypropylène, polyuréthane, silicone, caoutchouc cellulaire, mousse acrylique, et/ou butyle; et/ou
- a une épaisseur de moins d'environ 5 mm, de préférence de moins d'environ 1 mm, particulièrement préféré de moins d'environ 0,6 mm.

**7.** Bande d'étanchéité (110, 210, 310) selon la revendication 4, **caractérisée en ce que** la couche adhésive contient de butyle, de caoutchouc synthétique, d'acrylate réticulé, d'acrylate non-réticulé, et/ou une dispersion de colle.

**8.** Set d'étanchéité (100, 200, 300) pour installation entre une paroi (W) et un revêtement mural (B), comprenant:

- une bande d'étanchéité (110, 210, 310) selon une des revendications 1 à 7;
- une bande adhésive (120, 220, 320) avec une couche support (121, 221) en mousse de plastique et une couche adhésive (122, 222) disposée sous la couche support du côté de la paroi.

**9.** Set d'étanchéité (100) selon la revendication 8, **caractérisé en ce qu'**une couche adhésive (124) est disposée sur la bande adhésive du côté de la pièce.

**10.** Set d'étanchéité (100, 200, 300) selon une des revendications 8 ou 9, **caractérisé en ce que** la bande adhésive est formée tridimensionnellement comme coin intérieur (IE) ou comme coin extérieur (AE).

**11.** Raccordement de paroi imperméable, comprenant:

- une paroi (W);
- facultativement une bande adhésive (120, 220, 320) avec une couche support (121, 221, 321) en mousse de plastique et une couche adhésive (122, 222, 322) disposée sous la couche support du côté de la paroi,
- une bande d'étanchéité (110, 210, 310) selon une des revendications 1 à 7,
- un revêtement mural (B) disposé sur la structure donnant de l'adhérence (113, 213, 313) au moyen de colle à carrelage (FK) ou similaire.

Fig. 1

EP 3 256 655 B1

Fig. 2

Fig. 3

Fig. 4

## Fig. 5

## Fig. 6

W

IE                                    IE

Fig. 7

AE

1

2

3

4

5

6

7

8

9

Fig. 8

Fig. 9

Fig. 10

**EP 3 256 655 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011054523 A1
- DE 202011107186 U

- EP 1967107 B1